(19) Europäisches Patentamt
European Patent Office
Office européen des brevets

(11) Veröffentlichungsnummer: **0 445 420 A2**

(12) # EUROPÄISCHE PATENTANMELDUNG

(21) Anmeldenummer: **90125213.0**

(22) Anmeldetag: **21.12.90**

(51) Int. Cl.5: **A01N 47/38**, //(A01N47/38, 43:12),(A01N47/38,47:22), (A01N47/38,43:58),(A01N47/38, 43:42)

(30) Priorität: **25.02.90 DE 4005930**

(43) Veröffentlichungstag der Anmeldung: **11.09.91 Patentblatt 91/37**

(84) Benannte Vertragsstaaten: **BE DE DK FR GB IT NL**

(71) Anmelder: **BAYER AG**
**W-5090 Leverkusen 1 Bayerwerk(DE)**

(72) Erfinder: **Lindig, Markus, Dr.**
**11412 Riley**
**Overlandpark, KS 66120(US)**
Erfinder: **Müller, Klaus-Helmut, Dr.**
**Bockhackstrasse 55**
**W-4000 Düsseldorf 13(DE)**
Erfinder: **Feucht, Dieter, Dr.**
**Geschwister-Scholl-Strasse 88**
**W-4019 Monheim 2(DE)**
Erfinder: **Schmidt, Robert R., Dr.**
**Im Waldwinkel 110**
**W-5060 Bergisch-Gladbach 2(DE)**

(54) **Selektiv-herbizide Mittel, enthaltend Ethofumesate, Phenmedipham, Chloridazon oder Quinmerac in Kombination mit bestimmten Triazolinonen.**

(57) Die neuen, synergistischen Wirkstoffkombinationen bestehen aus (1) Ethofumesate, Phenmedipham, Chloridazon oder Quinmerac und (2) mindestens einem 4-Amino-1-carbamoyl-3-methyl-1,2,4-triazolin-5-on der Formel (I)

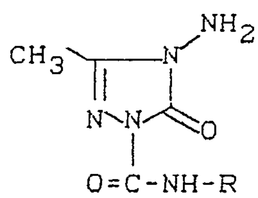

in welcher

R für jeweils geradkettiges oder verzweigtes $C_1$-$C_{10}$-Alkyl oder Halogen-$C_1$-$C_{10}$-alkyl, für geradkettiges oder verzweigtes $C_3$-$C_8$-Alkenyl oder $C_3$-$C_8$-Alkinyl oder für Cycloalkyl steht, welches gegebenenfalls durch Methyl oder Trifluormethyl substituiert sein kann,

können zur selektiven Unkrautbekämpfung in Rübenkulturen verwendet werden, wobei auch sonst schwer bekämpfbare Unkräuter sicher miterfaßt werden.

EP 0 445 420 A2

Die Erfindung betrifft neue herbizide, synergistische Wirkstoffkombinationen, die aus Ethofumesate, Phenmedipham, Chloridazon oder Quinmerac einerseits und bestimmten Triazolinonen andererseits bestehen und mit besonderem Vorteil zur selektiven Unkrautbekämpfung in Rübenkulturen verwendet werden können, wobei auch schwer bekämpfbare Rübenunkräuter wie Galium und Mercurialis und wichtige Ungräser wie Avena fatua und Alopecurus myosuroides sicher bekämpft werden.

Es ist bereits bekannt geworden, daß (±)2-ethoxy-2,3-dihydro-3,3-dimethylbenzofuran-5-yl-methansulfonate (commonname: Ethofumesate), 3-[(methoxycarbonyl)amino]phenyl-(3-methylphenyl)carbamate (commonname: Phenmedipham), 5-Amino-4-chloro-2-phenylpyridazin-3(2H)-on (commonname: Chloridazon) und 7-Chlor-3-methyl-8-chinolincarbonsäure (commonname: Quinmerac) als selektive Herbizide in Rübenkulturen eingesetzt werden können (vgl. US-P 4 072 495, GB 1 127 050, US-P 3 210 353 und EP-A-104 389). Die Wirkstoffe sind bei sehr guter herbizider Wirkung selektiv in Zuckerrüben einsetzbar und haben in dieser Indikation praktische Bedeutung erlangt.

Gegen bestimmte Unkräuter ist deren Wirkung aber nicht immer ausreichend. So wird insbesondere Mercurialis annua nicht sicher erfaßt, die Wirkung gegen Galium aparine, Polygonum-Arten, Matricaria-Arten, Sinapis arvensis,Alopecurus myosuroides und Avena fatua ist nicht immer ausreichend.

Es wurde nun überraschend gefunden, daß die neuen Wirkstoffkombinationen aus

(1) Ethofumesate der Formel

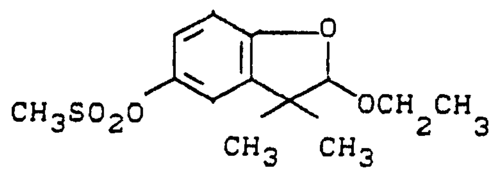

oder
Phenmedipham der Formel

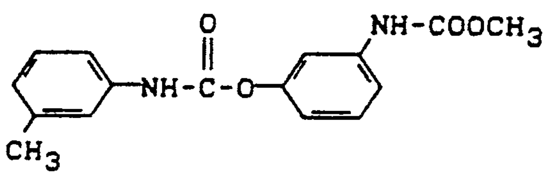

oder
Chloridazon der Formel

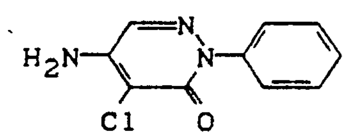

oder
Quinmerac der Formel

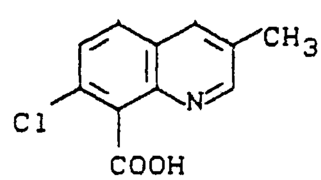

und
(2) mindestens einem 4-Amino-1-carbamoyl-3-methyl-1,2,4-triazolin-5-on der allgemeinen Formel (I)

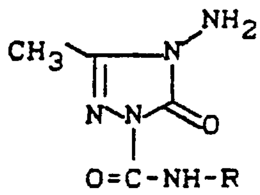

(I)

in welcher

R für jeweils geradkettiges oder verzweigtes $C_1$-$C_{10}$-Alkyl oder Halogen-$C_1$-$C_{10}$-alkyl für geradkettiges oder verzweigtes $C_3$-$C_8$-Alkenyl oder $C_3$-$C_8$-Alkinyl oder für Cycloalkyl steht, welches gegebenenfalls durch Methyl oder Trifluormethyl substituiert sein kann,

eine besonders hohe herbizide Wirksamkeit aufweisen, ohne Rübenkulturen zu schädigen.

Bevorzugte Wirkstoffe der Formel (I) sind solche Verbindungen, in denen R für jeweils geradkettiges oder verzweigtes $C_3$-$C_8$-Alkyl oder Halogen-$C_3$-$C_8$-alkyl steht, wobei Halogen insbesondere für Fluor und/oder Chlor steht, oder für jeweils geradkettiges oder verzweigtes $C_3$-$C_5$-Alkenyl oder $C_3$-$C_5$-Alkinyl oder für gegebenenfalls durch Methyl oder Trifluormethyl substituiertes $C_3$-$C_6$-Cycloalkyl steht.

Besonders bevorzugte Wirkstoffe der Formel (I) sind solche Verbindungen, in denen

R für $-C(CH_3)_3$ (Verbindung I-1) / Schmelzpunkt: 132° C

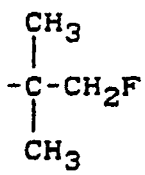 (Verbindung I-2) / Schmelzpunkt: 178° C

R = $-\underset{\displaystyle |\atop \displaystyle CH_3}{CH}-CH(CH_3)_2$ (Verbindung I-3)/ Schmelzpunkt: 103° C

R = $-C(CH_3)_2-CH_2-CH_3$ (Verbindung I-4)/ Schmelzpunkt: 99° C

R = $-C(CH_3)_2-CH_2-Cl$ (Verbindung I-5)/ Schmelzpunkt: 118° C

R = $-C(CH_3)_2-C{\equiv}CH$ (Verbindung I-6)/ Schmelzpunkt: 119° C

R = $-C(CH_3)_2-C_3H_7$-n (Verbindung I-7)/ Schmelzpunkt: 110° C

R = $-C(CH_3)_2-CH(CH_3)_2$ (Verbindung I-8)/ Schmelzpunkt: 134° C

R = $-C(CH_3)_2-C_4H_9$-n (Verbindung I-9)/ Brechungsindex: $n_D^{22}$ : 1,4891

R = $-C(CH_3)_2-CF_3$ (Verbindung I-10)/Schmelzpunkt: 150° C

R = 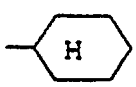 (Verbindung I-11)/ Schmelzpunkt: 148° C

R = 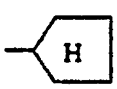 (Verbindung I-12)/ Schmelzpunkt: 94° C

R = 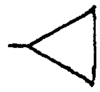 (Verbindung I-13)/ Schmelzpunkt: $134^{\circ}$ C

R = 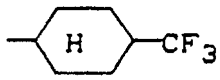 (Verbindung I-14)/ Schmelzpunkt: $162^{\circ}$ C

R = 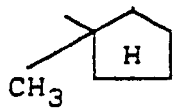 (Verbindung I-15)/ Schmelzpunkt: $145^{\circ}$ C

Die Wirkstoffe der Formel (I) sind bekannt oder lassen sich nach bekannten Methoden herstellen (vgl. EP-A 294 666).

Überraschenderweise ist die herbizide Wirksamkeit der erfindungsgemäßen Wirkstoffkombinationen wesentlich höher als die Summe der Wirkungen der einzelnen Wirkstoffe. Es liegt somit ein nicht vorhersehbarer echter synergistischer Effekt vor und nicht nur eine Wirkungsergänzung. Die neuen Wirkstoffkombinationen sind ebenso wie Ethofumesate, Phenmedipham, Chloridazon oder Quinmerac in Rübenkulturen sehr gut verträglich, wobei die neuen Wirkstoffkombinationen auch die sonst schwer bekämpfbaren "Problemunkräuter" Galium und Mercurialis, sowie weitere wichtige Rübenunkräuter hervorragend bekämpfen. Die neuen Wirkstoffkombinationen stellen somit eine wertvolle Bereicherung der Rübenherbizide dar.

Als Unkräuter, die im allgemeinen als Verunreinigung in Rübenkulturen auftreten und durch die erfindungsgemäßen Wirkstoffkombinationen sicher bekämpft werden können, seien beispielsweise genannt:
dikotyle Unkräuter der Gattungen: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Mercurialis; sowie
monokotyle Unkräuter der Gattungen: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.

Die Verwendung der erfindungsgemäßen Wirkstoffkombinationen ist jedoch keineswegs auf diese Gattungen beschränkt, sondern erstreckt sich in gleicher Weise auch auf andere Pflanzen.

Die erfindungsgemäßen Wirkstoffkombinationen weisen, wie bereits angegeben, bei sehr guter Verträglichkeit gegenüber Rübenkulturen eine hervorragende Wirkung gegen Unkräuter und Ungräser auf; ihr Einsatz als selektive Rübenherbizide ist daher besonders bevorzugt.

Der synergistische Effekt der erfindungsgemäßen Wirkstoffkombinationen ist bei bestimmten Konzentrationsverhältnissen besonders stark ausgeprägt. Jedoch können die Gewichtsverhältnisse der Wirkstoffe in den Wirkstoffkombinationen in relativ großen Bereichen variiert werden. Im allgemeinen entfallen auf 1 Gewichtsteil Wirkstoff an Ethofumesate, Phenmedipham, Chloridazon oder Quinmerac 0,01 bis 20 Gewichtsteile, vorzugsweise 0,1 bis 10 Gewichtsteile und besonders bevorzugt 0,2 bis 8, insbesondere 0,2 bis 5 Gewichtsteile Wirkstoff aus der Wirkstoffgruppe der Formel (I).

Die erfindungsgemäßen Wirkstoffkombinationen können in die üblichen Formulierungen übergeführt werden, wie Lösungen, Emulsionen, Spritzpulver, Suspensionen, Pulver, Stäubemittel, Pasten, lösliche Pulver, Granulate, Suspensions-Emulsionskonzentrate, Wirkstoff-imprägnierte Natur- und synthetische Stoffe, Feinstverkapselungen in polymeren Stoffen.

Diese Formulierungen werden in bekannter Weise hergestellt, z. B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage: z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoffkombination, vorzugsweise zwischen 0,5 und 90 %.

Die erfindungsgemäßen Wirkstoffkombinationen werden im allgemeinen in Form von Fertigformulierungen zur Anwendung gebracht. Die in den Wirkstoffkombinationen enthaltenen Wirkstoffe können aber auch als Einzelformulierungen bei der Anwendung gemischt, d.h. in Form von Tankmischungen zur Anwendung gebracht werden.

Die neuen Wirkstoffkombinationen können als solche oder in ihren Formulierungen weiterhin auch in Mischung mit anderen bekannten Rübenherbiziden Verwendung finden, wobei wiederum Fertigformulierungen oder Tankmischungen möglich sind. Auch eine Mischung mit anderen bekannten Wirkstoffen, wie Fungiziden, Insektiziden, Akariziden, Nematiziden, Schutzstoffen gegen Vogelfraß, Wuchsstoffen, Pflanzennährstoffen und Bodenstrukturverbesserungsmitteln ist möglich. Für bestimmte Anwendungszwecke, insbesondere im post-emergence-Verfahren, kann es ferner vorteilhaft sein, in die Formulierungen als weitere Zusatzstoffe pflanzenverträgliche mineralische oder vegetabilische Öle oder Ammoniumsalze wie z.B. Ammoniumsulfat oder Ammoniumrhodanid aufzunehmen; auch mit anderen Additiven kann die Wirkung verbessert werden.

Die neuen Wirkstoffkombinationen können als solche, in Form ihrer Formulierungen oder der daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Stäuben oder Streuen.

Die Aufwandmengen der erfindungsgemäßen Wirkstoffkombinationen können in einem gewissen Bereich variiert werden; sie hängen u.a. vom Wetter und von den Bodenfaktoren ab. Im allgemeinen liegen die Aufwandmengen zwischen 0,05 und 15 kg Wirkstoffkombination pro ha, vorzugsweise zwischen 0,1 und 10 kg/ha, besonders bevorzugt zwischen 0,25 und 6 kg/ha.

Die erfindungsgemäßen Wirkstoffkombinationen können sowohl vor als auch nach dem Auflaufen der Pflanzen appliziert werden, also im Vorauflauf- oder im Nachauflauf-Verfahren.

Die gute herbizide Wirkung der neuen Wirkstoffkombinationen geht aus den nachfolgenden Beispielen hervor. Während die einzelnen Wirkstoffe in der herbiziden Wirkung Schwächen aufweisen, zeigen die Kombinationen eine sehr breite Unkrautwirkung, die über eine einfache Wirkungssummierung hinausgeht.

Ein synergistischer Effekt liegt bei Herbiziden immer dann vor, wenn die herbizide Wirkung der Wirkstoffkombination größer ist als die der einzelnen applizierten Wirkstoffe.

Die zu erwartende Wirkung für eine gegebene Kombination zweier Herbizide kann wie folgt berechnet werden (vgl. COLBY, S.R., "Calculating synergistic and antagonistic responses of herbicide combinations", Weeds 15, Seiten 20 - 22, 1967):

Wenn

$X$ = % Schädigung durch Herbizid A bei p kg/ha Aufwandmenge und
$Y$ = % Schädigung durch Herbizid B bei q kg/ha Aufwandmenge und
$E$ = die erwartete Schädigung der Herbizide A und B, bei p und q kg/ha Aufwandmenge,

dann ist

$$E = X + Y - \frac{X \cdot Y}{100}$$

Ist die tatsächliche Schädigung größer als berechnet, so ist die Kombination in ihrer Wirkung überadditiv, d.h. sie zeigt einen synergistischen Effekt.

Aus den nachfolgenden Beispielen geht hervor, daß die gefundene herbizide Wirkung der erfindungsgemäßen Wirkstoffkombinationen bei den Unkräutern größer ist als die berechnete, d.h., daß die neuen Wirkstoffkombinationen synergistisch wirken.

Anwendungsbeispiele

In den Versuchen verwendete Präparate:

Als Formulierung der Verbindungen I-1 und I-2 wurde jeweils ein 40 %iges WP (dispergierbares Pulver) eingesetzt.

Als Quinmerac-Formulierung wurde ein 50 %iges WP (dispergierbares Pulver) eingesetzt.

Ethofumesate wurde als Flüssig-Formulierung mit 200 g/l eingesetzt. (Handelsname: ®Tramat, Fa. Schering AG).

Als Phenmedipham-Formulierung wurde ein EC (emulgierbares Konzentrat) mit 157 g/l eingesetzt. ( Handelsname: ®Betanal, Fa. Schering AG).

Als Chloridazon-Formulierung wurde ein 65 %iges WG (dispergierbares Granulat) eingesetzt. (Handelsname: ®Pyramin, Fa. BASF AG).

Durchführung der Versuche

Herstellung der Wirkstoffzubereitungen: Von den Formulierungen der Präparate werden die benötigten Mengen abgewogen bzw. abgemessen und mit Wasser zu Spritzbrühen aufbereitet; durch Mischen werden die gewünschten Kombinationen von Präparaten hergestellt.

Vorauflaufverfahren: In einer Spritzkabine werden Versuchsgefäße mit Erde mit den Präparaten behandelt, in welche die Samen der Testpflanzen zuvor ausgesät werden.

Nachauflaufverfahren: Testpflanzen werden im Gewächshaus bis zu einer Größe von 5 bis 10 cm angezogen und dann in einer Spritzkabine mit den Herbiziden gespritzt.

Die Konzentration der Spritzbrühe wird so gewählt, daß in 500 1 Wasser/ha die jeweils gewünschten Wirkstoffmengen ausgebracht werden.

Nach der Behandlung werden die Versuchsgefäße mit den Testpflanzen im Gewächshaus unter kontrollierten Bedingungen (Temperatur, Luftfeuchte, Licht) bis zur Auswertung gehalten.

Nach zwei bis drei Wochen wird der Schädigungsgrad der Pflanzen bonitiert in % Schädigung im Vergleich zur Entwicklung der unbehandelten Kontrolle.

Es bedeuten:

0 % = keine Wirkung (wie unbehandelte Kontrolle)
100 % = totale Vernichtung

Wirkstoffe und Wirkstoffkombinationen, Aufwandmengen und Resultate gehen aus den nachfolgenden Tabellen hervor.

Die Abkürzungen der Testpflanzen bedeuten dabei im einzelnen:

ALOMY = Alopecurus myosuroides
AVEFA = Avena fatua
CHEAL = Chenopodium album
GALAP = Galium aparine
MATIN = Matricaria inodora
MERAN = Mercurialis annua
POLCO = Polygonum convolvulus
SINAL = Sinapis alba

Kombinationen mit Ethofumesate

Tab.1.1 Vorauflauf-Test/Gewächshaus

| Wirkstoff bzw.-kombination | Aufwandmenge g/ha | Testpflanzen Schädigung bzw. Wirkung in % Rüben gef. | Rüben ber. | MATIN gef. | MATIN ber. |
|---|---|---|---|---|---|
| (I-1) | 250 | 0 | | 80 | |
| Ethofumesate | 500 | 20 | | 30 | |
| | 250 | 0 | | 20 | |
| | 125 | 0 | | 20 | |
| (I-1) +Ethofumesate | 250+500 | 0 | 20 | 98 | 86 |
| | 250+250 | 0 | 0 | 90 | 84 |
| | 250+125 | 0 | 0 | 90 | 84 |

gef. = gefundene Schädigung/Wirkung
ber. = nach der Colby-Formel berechnete Schädigung/Wirkung

Tab.1.2 Vorauflauf-Test/Gewächshaus

| Wirkstoff bzw.-kombination | Aufwandmenge g/ha | Testpflanzen Schädigung bzw. Wirkung in % Rüben gef. | Rüben ber. | MERAN gef. | MERAN ber. |
|---|---|---|---|---|---|
| (I-1) | 250 | 0 | | 20 | |
| Ethofumesate | 500 | 20 | | 80 | |
| (I-1) +Ethofumesate | 250+500 | 0 | 20 | 100 | 84 |

gef. = gefundene Schädigung/Wirkung
ber. = nach der Colby-Formel berechnete Schädigung/Wirkung

Tab.1.3 Vorauflauf-Test/Gewächshaus

| Wirkstoff bzw.-kombination | Aufwandmenge g/ha | Testpflanzen Schädigung bzw. Wirkung in % Rüben gef. | Rüben ber. | ALOMY gef. | ALOMY ber. |
|---|---|---|---|---|---|
| (I-1) | 500 | 0 | | 80 | |
| | 250 | 0 | | 70 | |
| Ethofumesate | 500 | 20 | | 80 | |
| (I-1) +Ethofumesate | 500+500 | 0 | 20 | 100 | 96 |
| | 250+500 | 0 | 20 | 98 | 94 |

gef. = gefundene Schädigung/Wirkung
ber. = nach der Colby-Formel berechnete Schädigung/Wirkung

Tab.1.4 Vorauflauf-Test/Gewächshaus

| Wirkstoff bzw.-kombination | Aufwandmenge g/ha | Testpflanzen Schädigung bzw. Wirkung in % Rüben gef. | Rüben ber. | GALAP gef. | GALAP ber. |
|---|---|---|---|---|---|
| (I-1) | 1000 | 0 | | 80 | |
| Ethofumesate | 250 | 0 | | 50 | |
| | 125 | 0 | | 10 | |
| (I-1) +Ethofumesate | 1000+250 | 10 | 0 | 98 | 90 |
| | 1000+125 | 0 | 0 | 100 | 82 |

gef. = gefundene Schädigung/Wirkung
ber. = nach der Colby-Formel berechnete Schädigung/Wirkung

Tab.1.5 Vorauflauf-Test/Gewächshaus

| Wirkstoff bzw.-kombination | Aufwandmenge g/ha | Testpflanzen Schädigung bzw. Wirkung in % Rüben gef. | Rüben ber. | MERAN gef. | MERAN ber. |
|---|---|---|---|---|---|
| (I-2) | 1000 | 0 | | 80 | |
| | 500 | 0 | | 50 | |
| Ethofumesate | 250 | 0 | | 70 | |
| | 125 | 0 | | 50 | |
| (I-2) +Ethofumesate | 1000+250 | 10 | 0 | 98 | 94 |
| | 500+250 | 10 | 0 | 90 | 85 |
| | 1000+125 | 10 | 0 | 98 | 90 |
| | 500+125 | 0 | 0 | 80 | 75 |

gef. = gefundene Schädigung/Wirkung
ber. = nach der Colby-Formel berechnete Schädigung/Wirkung

Tab.1.6 Vorauflauf-Test/Gewächshaus

| Wirkstoff bzw.-kombination | Aufwandmenge g/ha | Testpflanzen Schädigung bzw. Wirkung in % Rüben gef. | Rüben ber. | ALOMY gef. | ALOMY ber. |
|---|---|---|---|---|---|
| (I-2) | 1000 | 0 | | 90 | |
| | 500 | 0 | | 50 | |
| Ethofumesate | 500 | 20 | | 80 | |
| (I-2) +Ethofumesate | 1000+500 | 20 | 0 | 100 | 98 |
| | 500+500 | 10 | 0 | 100 | 90 |

gef. = gefundene Schädigung/Wirkung
ber. = nach der Colby-Formel berechnete Schädigung/Wirkung

Tab.2.1 Vorauflauf-Test/Gewächshaus

| Wirkstoff bzw.-kombination | Aufwandmenge g/ha | Testpflanzen Schädigung bzw. Wirkung in % Rüben gef. | Rüben ber. | MERAN gef. | MERAN ber. |
|---|---|---|---|---|---|
| (I-1) | 500 | 0 | | 90 | |
| | 250 | 0 | | 80 | |
| Ethofumesate | 250 | 0 | | 10 | |
| (I-1) +Ethofumesate | 500+250 | 0 | 0 | 100 | 91 |
| | 250+250 | 0 | 0 | 98 | 82 |

gef. = gefundene Schädigung/Wirkung
ber. = nach der Colby-Formel berechnete Schädigung/Wirkung

Tab.2.2 Vorauflauf-Test/Gewächshaus

| Wirkstoff bzw.-kombination | Aufwandmenge g/ha | Testpflanzen Schädigung bzw. Wirkung in % Rüben gef. | Rüben ber. | GALAP gef. | GALAP ber. |
|---|---|---|---|---|---|
| (I-1) | 1000 | 0 | | 60 | |
| | 500 | 0 | | 50 | |
| | 250 | 0 | | 20 | |
| Ethofumesate | 500 | 0 | | 90 | |
| (I-1) +Ethofumesate | 1000+500 | 0 | 0 | 100 | 96 |
| | 500+500 | 0 | 0 | 100 | 95 |
| | 250+500 | 0 | 0 | 100 | 92 |

gef. = gefundene Schädigung/Wirkung
ber. = nach der Colby-Formel berechnete Schädigung/Wirkung

Tab.2.3 Vorauflauf-Test/Gewächshaus

| Wirkstoff bzw.-kombination | Aufwandmenge g/ha | Testpflanzen Schädigung bzw. Wirkung in % Rüben gef. | Rüben ber. | MERAN gef. | MERAN ber. |
|---|---|---|---|---|---|
| (I-2) | 1000 | 0 | | 80 | |
| | 500 | 0 | | 60 | |
| | 250 | 0 | | 50 | |
| Ethofumesate | 500 | 0 | | 60 | |
| | 250 | 0 | | 10 | |
| | 125 | 0 | | 0 | |
| (I-2) +Ethofumesate | 1000+500 | 0 | 0 | 100 | 92 |
| | 500+500 | 0 | 0 | 98 | 84 |
| | 250+500 | 0 | 0 | 98 | 80 |
| | 1000+250 | 0 | 0 | 90 | 82 |
| | 500+250 | 0 | 0 | 90 | 64 |
| | 250+250 | 0 | 0 | 50 | 55 |
| | 1000+125 | 0 | 0 | 100 | 80 |
| | 500+125 | 0 | 0 | 100 | 60 |
| | 250+125 | 0 | 0 | 90 | 50 |

gef. = gefundene Schädigung/Wirkung
ber. = nach der Colby-Formel berechnete Schädigung/Wirkung

Tab.2.4 Vorauflauf-Test/Gewächshaus

| Wirkstoff bzw.-kombination | Aufwandmenge g/ha | Testpflanzen Schädigung bzw. Wirkung in % Rüben gef. | ber. | ALOMY gef. | ber. |
|---|---|---|---|---|---|
| (I-2) | 1000 | 0 | | 90 | |
| | 500 | 0 | | 80 | |
| | 250 | 0 | | 50 | |
| Ethofumesate | 500 | 0 | | 30 | |
| | 250 | 0 | | 0 | |
| | 125 | 0 | | 0 | |
| (I-2) +Ethofumesate | 1000+500 | 0 | 0 | 100 | 93 |
| | 500+500 | 0 | 0 | 100 | 86 |
| | 250+500 | 0 | 0 | 40 | 65 |
| | 1000+250 | 0 | 0 | 100 | 90 |
| | 500+250 | 0 | 0 | 100 | 80 |
| | 250+250 | 0 | 0 | 100 | 50 |
| | 1000+125 | 0 | 0 | 100 | 90 |
| | 500+125 | 0 | 0 | 100 | 80 |
| | 250+125 | 0 | 0 | 100 | 50 |

gef. = gefundene Schädigung/Wirkung
ber. = nach der Colby-Formel berechnete Schädigung/Wirkung

Tab.2.5 Vorauflauf-Test/Gewächshaus

| Wirkstoff bzw.-kombination | Aufwandmenge g/ha | Testpflanzen Schädigung bzw. Wirkung in % Rüben gef. | Rüben ber. | POLCO gef. | POLCO ber. |
|---|---|---|---|---|---|
| (I-2) | 1000 | 0 | | 30 | |
| | 500 | 0 | | 10 | |
| | 250 | 0 | | 0 | |
| Ethofumesate | 500 | 0 | | 0 | |
| | 250 | 0 | | 0 | |
| | 125 | 0 | | 0 | |
| (I-2) +Ethofumesate | 1000+500 | 0 | 0 | 100 | 30 |
| | 500+500 | 0 | 0 | 100 | 10 |
| | 250+500 | 0 | 0 | 100 | 0 |
| | 1000+250 | 0 | 0 | 100 | 30 |
| | 500+250 | 0 | 0 | 100 | 10 |
| | 250+250 | 0 | 0 | 100 | 0 |
| | 1000+125 | 0 | 0 | 100 | 30 |
| | 500+125 | 0 | 0 | 100 | 10 |
| | 250+125 | 0 | 0 | 30 | 0 |

gef. = gefundene Schädigung/Wirkung
ber. = nach der Colby-Formel berechnete Schädigung/Wirkung

Kombinationen mit Chloridazon

Tab.3.1 Vorauflauf-Test/Gewächshaus

| Wirkstoff bzw.-kombination | Aufwandmenge g/ha | Testpflanzen Schädigung bzw. Wirkung in % Rüben gef. | ber. | AVEFA gef. | ber. |
|---|---|---|---|---|---|
| (I-1) | 1000 | 0 | | 98 | |
| | 500 | 0 | | 80 | |
| | 250 | 0 | | 70 | |
| Chloridazon | 500 | 0 | | 30 | |
| (I-1) +Chloridazon | 1000+500 | 0 | 0 | 100 | 99 |
| | 500+500 | 0 | 0 | 100 | 86 |
| | 250+500 | 0 | 0 | 90 | 79 |

gef. = gefundene Schädigung/Wirkung
ber. = nach der Colby-Formel berechnete Schädigung/Wirkung

Tab.3.2 Vorauflauf-Test/Gewächshaus

| Wirkstoff bzw.-kombination | Aufwandmenge g/ha | Testpflanzen Schädigung bzw. Wirkung in % Rüben gef. | ber. | SINAL gef. | ber. |
|---|---|---|---|---|---|
| (I-1) | 500 | 0 | | 80 | |
| | 250 | 0 | | 60 | |
| Chloridazon | 1000 | 0 | | 30 | |
| | 500 | 0 | | 30 | |
| (I-1) +Chloridazon | 500+1000 | 0 | 0 | 98 | 86 |
| | 250+1000 | 0 | 0 | 80 | 72 |
| | 500+500 | 0 | 0 | 98 | 86 |
| | 250+500 | 0 | 0 | 80 | 72 |

gef. = gefundene Schädigung/Wirkung
ber. = nach der Colby-Formel berechnete Schädigung/Wirkung

Tab.3.3 Vorauflauf-Test/Gewächshaus

| Wirkstoff bzw.-kombination | Aufwandmenge g/ha | Testpflanzen Schädigung bzw. Wirkung in % Rüben gef. | Rüben ber. | ALOMY gef. | ALOMY ber. |
|---|---|---|---|---|---|
| (I-1) | 1000 | 0 | | 90 | |
| | 500 | 0 | | 80 | |
| Chloridazon | 500 | 0 | | 30 | |
| (I-1) +Chloridazon | 1000+500 | 0 | 0 | 98 | 93 |
| | 500+500 | 0 | 0 | 98 | 86 |

gef. = gefundene Schädigung/Wirkung
ber. = nach der Colby-Formel berechnete Schädigung/Wirkung

Tab.3.4 Vorauflauf-Test/Gewächshaus

| Wirkstoff bzw.-kombination | Aufwandmenge g/ha | Testpflanzen Schädigung bzw. Wirkung in % Rüben gef. | Rüben ber. | MERAN gef. | MERAN ber. |
|---|---|---|---|---|---|
| (I-2) | 1000 | 0 | | 80 | |
| | 500 | 0 | | 50 | |
| Chloridazon | 1000 | 0 | | 0 | |
| (I-2) +Chloridazon | 1000+1000 | 10 | 0 | 100 | 80 |
| | 500+1000 | 0 | 0 | 80 | 50 |

gef. = gefundene Schädigung/Wirkung
ber. = nach der Colby-Formel berechnete Schädigung/Wirkung

Tab.3.5 Vorauflauf-Test/Gewächshaus

| Wirkstoff bzw.-kombination | Aufwandmenge g/ha | Testpflanzen Schädigung bzw. Wirkung in % Rüben gef. | Rüben ber. | SINAL gef. | SINAL ber. |
|---|---|---|---|---|---|
| (I-2) | 1000 | 0 | | 90 | |
| | 500 | 0 | | 80 | |
| | 250 | 0 | | 60 | |
| Chloridazon | 1000 | 0 | | 30 | |
| | 500 | 0 | | 30 | |
| (I-2) +Chloridazon | 1000+1000 | 10 | 0 | 100 | 93 |
| | 500+1000 | 0 | 0 | 100 | 86 |
| | 250+1000 | 0 | 0 | 98 | 72 |
| | 1000+500 | 0 | 0 | 100 | 93 |
| | 500+500 | 0 | 0 | 90 | 86 |
| | 250+500 | 0 | 0 | 80 | 72 |

gef. = gefundene Schädigung/Wirkung
ber. = nach der Colby-Formel berechnete Schädigung/Wirkung

Tab.3.6 Vorauflauf-Test/Gewächshaus

| Wirkstoff bzw.-kombination | Aufwandmenge g/ha | Testpflanzen Schädigung bzw. Wirkung in % Rüben gef. | Rüben ber. | POLCO gef. | POLCO ber. |
|---|---|---|---|---|---|
| (I-2) | 250 | 0 | | 90 | |
| Chloridazon | 1000 | 0 | | 70 | |
| | 500 | 0 | | 70 | |
| (I-2) +Chloridazon | 250+1000 | 0 | 0 | 100 | 97 |
| | 250+500 | 0 | 0 | 100 | 97 |

gef. = gefundene Schädigung/Wirkung
ber. = nach der Colby-Formel berechnete Schädigung/Wirkung

Tab.4.1 Vorauflauf-Test/Gewächshaus

| Wirkstoff bzw.-kombination | Aufwandmenge g/ha | Testpflanzen Schädigung bzw. Wirkung in % Rüben gef. | Rüben ber. | POLCO gef. | POLCO ber. |
|---|---|---|---|---|---|
| (I-1) | 1000 | 0 | | 50 | |
| | 500 | 0 | | 10 | |
| | 250 | 0 | | 20 | |
| Chloridazon | 1000 | 0 | | 90 | |
| | 500 | 0 | | 20 | |
| (I-1) +Chloridazon | 1000+1000 | 0 | 0 | 100 | 95 |
| | 500+1000 | 0 | 0 | 100 | 91 |
| | 250+1000 | 0 | 0 | 70 | 92 |
| | 1000+500 | 0 | 0 | 100 | 60 |
| | 500+500 | 0 | 0 | 80 | 28 |
| | 250+500 | 0 | 0 | 80 | 36 |

gef. = gefundene Schädigung/Wirkung
ber. = nach der Colby-Formel berechnete Schädigung/Wirkung

Tab.4.2 Vorauflauf-Test/Gewächshaus

| Wirkstoff bzw.-kombination | Aufwandmenge g/ha | Testpflanzen Schädigung bzw. Wirkung in % Rüben gef. | Rüben ber. | MERAN gef. | MERAN ber. |
|---|---|---|---|---|---|
| (I-2) | 500 | 0 | | 60 | |
| | 250 | 0 | | 50 | |
| Chloridazon | 1000 | 0 | | 50 | |
| (I-2) +Chloridazon | 500+1000 | 0 | 0 | 100 | 80 |
| | 250+1000 | 0 | 0 | 90 | 75 |

gef. = gefundene Schädigung/Wirkung
ber. = nach der Colby-Formel berechnete Schädigung/Wirkung

Tab.4.3 Vorauflauf-Test/Gewächshaus

| Wirkstoff bzw.-kombination | Aufwandmenge g/ha | Testpflanzen Schädigung bzw. Wirkung in % Rüben gef. | ber. | AVEFA gef. | ber. |
|---|---|---|---|---|---|
| (I-2) | 1000 | 0 | | 90 | |
| | 500 | 0 | | 60 | |
| | 250 | 0 | | 40 | |
| Chloridazon | 1000 | 0 | | 40 | |
| | 500 | 0 | | 0 | |
| (I-2) +Chloridazon | 1000+1000 | 0 | 0 | 100 | 94 |
| | 500+1000 | 0 | 0 | 100 | 76 |
| | 250+1000 | 0 | 0 | 100 | 64 |
| | 1000+500 | 0 | 0 | 100 | 90 |
| | 500+500 | 0 | 0 | 80 | 60 |
| | 250+500 | 0 | 0 | 70 | 40 |

gef. = gefundene Schädigung/Wirkung
ber. = nach der Colby-Formel berechnete Schädigung/Wirkung

Tab.5.1 Vorauflauf-Test/Gewächshaus

| Wirkstoff bzw.-kombination | Aufwandmenge g/ha | Testpflanzen Schädigung bzw. Wirkung in % Rüben gef. | ber. | POLCO gef. | ber. |
|---|---|---|---|---|---|
| (I-1) | 1000 | 0 | | 60 | |
| | 500 | 0 | | 60 | |
| | 250 | 0 | | 10 | |
| Chloridazon | 1000 | 0 | | 50 | |
| | 500 | 0 | | 20 | |
| (I-1) +Chloridazon | 1000+1000 | 0 | 0 | 100 | 80 |
| | 500+1000 | 0 | 0 | 100 | 80 |
| | 250+1000 | 0 | 0 | 100 | 55 |
| | 1000+500 | 0 | 0 | 80 | 68 |
| | 500+500 | 0 | 0 | 80 | 68 |
| | 250+500 | 0 | 0 | 70 | 28 |

gef. = gefundene Schädigung/Wirkung
ber. = nach der Colby-Formel berechnete Schädigung/Wirkung

<u>Kombinationen mit Phenmedipham</u>

(Versuch v. 21.09.89)

Tab.6.1 Nachauflauf-Test/Gewächshaus

| Wirkstoff bzw.-kombination | Aufwandmenge g/ha | Testpflanzen Schädigung bzw. Wirkung in % Rüben gef. | Rüben ber. | AVEFA gef. | AVEFA ber. |
|---|---|---|---|---|---|
| (I-1) | 1000 | 0 | | 100 | |
| | 500 | 0 | | 70 | |
| | 250 | 0 | | 70 | |
| Phenmedipham | 500 | 0 | | 0 | |
| | 250 | 0 | | 0 | |
| (I-1) +Phenmedipham | 1000+500 | 10 | 0 | 100 | 100 |
| | 500+500 | 10 | 0 | 100 | 70 |
| | 250+500 | 10 | 0 | 70 | 70 |
| | 1000+250 | 10 | 0 | 100 | 100 |
| | 500+250 | 0 | 0 | 98 | 70 |
| | 250+250 | 0 | 0 | 80 | 70 |

gef. = gefundene Schädigung/Wirkung
ber. = nach der Colby-Formel berechnete Schädigung/Wirkung

Tab.6.2 Nachauflauf-Test/Gewächshaus

| Wirkstoff bzw.-kombination | Aufwandmenge g/ha | Testpflanzen Schädigung bzw. Wirkung in % Rüben gef. | Rüben ber. | ALOMY gef. | ALOMY ber. |
|---|---|---|---|---|---|
| (I-1) | 1000 | 0 | | 80 | |
| | 500 | 0 | | 60 | |
| | 250 | 0 | | 50 | |
| Phenmedipham | 500 | 0 | | 10 | |
| | 250 | 0 | | 0 | |
| (I-1) +Phenmedipham | 1000+500 | 10 | 0 | 98 | 82 |
| | 500+500 | 10 | 0 | 90 | 64 |
| | 250+500 | 10 | 0 | 60 | 55 |
| | 1000+250 | 10 | 0 | 90 | 80 |
| | 500+250 | 0 | 0 | 70 | 60 |
| | 250+250 | 0 | 0 | 60 | 50 |

gef. = gefundene Schädigung/Wirkung
ber. = nach der Colby-Formel berechnete Schädigung/Wirkung

Tab.6.3 Nachauflauf-Test/Gewächshaus

| Wirkstoff bzw.-kombination | Aufwandmenge g/ha | Testpflanzen Schädigung bzw. Wirkung in % Rüben gef. | Rüben ber. | AVEFA gef. | AVEFA ber. |
|---|---|---|---|---|---|
| (I-2) | 1000 | 0 | | 98 | |
| | 500 | 0 | | 70 | |
| | 250 | 0 | | 30 | |
| Phenmedipham | 500 | 0 | | 0 | |
| | 250 | 0 | | 0 | |
| (I-2) +Phenmedipham | 1000+500 | 10 | 0 | 100 | 98 |
| | 500+500 | 10 | 0 | 98 | 70 |
| | 250+500 | 10 | 0 | 70 | 30 |
| | 1000+250 | 10 | 0 | 100 | 98 |
| | 500+250 | 0 | 0 | 98 | 70 |
| | 250+250 | 0 | 0 | 60 | 30 |

gef. = gefundene Schädigung/Wirkung
ber. = nach der Colby-Formel berechnete Schädigung/Wirkung

Tab.6.4 Nachauflauf-Test/Gewächshaus

| Wirkstoff bzw.-kombination | Aufwandmenge g/ha | Testpflanzen Schädigung bzw. Wirkung in % Rüben gef. | Rüben ber. | POLCO gef. | POLCO ber. |
|---|---|---|---|---|---|
| (I-2) | 500 | 0 | | 70 | |
| | 250 | 0 | | 40 | |
| Phenmedipham | 250 | 0 | | 70 | |
| (I-2) +Phenmedipham | 500+250 | 0 | 0 | 100 | 91 |
| | 250+250 | 0 | 0 | 100 | 82 |

gef. = gefundene Schädigung/Wirkung
ber. = nach der Colby-Formel berechnete Schädigung/Wirkung

Kombinationen mit Quinmerac

Tab.7.1 Vorauflauf-Test/Gewächshaus

| Wirkstoff bzw.-kombination | Aufwandmenge g/ha | Testpflanzen Schädigung bzw. Wirkung in % Rüben gef. | Rüben ber. | AVEFA gef. | AVEFA ber. |
|---|---|---|---|---|---|
| (I-1) | 1000 | 0 | | 98 | |
| | 500 | 0 | | 90 | |
| | 250 | 0 | | 60 | |
| Quinmerac | 125 | 0 | | 0 | |
| (I-1) +Quinmerac | 1000+125 | 0 | 0 | 100 | 98 |
| | 500+125 | 0 | 0 | 98 | 90 |
| | 250+125 | 0 | 0 | 90 | 60 |

gef. = gefundene Schädigung/Wirkung
ber. = nach der Colby-Formel berechnete Schädigung/Wirkung

Tab.7.2 Vorauflauf-Test/Gewächshaus

| Wirkstoff bzw.-kombination | Aufwandmenge g/ha | Testpflanzen Schädigung bzw. Wirkung in % Rüben gef. | Rüben ber. | CHEAL gef. | CHEAL ber. |
|---|---|---|---|---|---|
| (I-1) | 500 | 0 | | 90 | |
| | 250 | 0 | | 98 | |
| Quinmerac | 500 | 0 | | 0 | |
| | 250 | 0 | | 0 | |
| (I-1) +Quinmerac | 500+500 | 0 | 0 | 100 | 90 |
| | 250+500 | 0 | 0 | 100 | 98 |
| | 500+250 | 0 | 0 | 100 | 90 |
| | 250+250 | 0 | 0 | 100 | 98 |

gef. = gefundene Schädigung/Wirkung
ber. = nach der Colby-Formel berechnete Schädigung/Wirkung

Tab.7.3 Vorauflauf-Test/Gewächshaus

| Wirkstoff bzw.-kombination | Aufwandmenge g/ha | Testpflanzen Schädigung bzw. Wirkung in % Rüben gef. | ber. | MERAN gef. | ber. |
|---|---|---|---|---|---|
| (I-2) | 1000 | 0 | | 70 | |
| | 500 | 0 | | 70 | |
| Quinmerac | 250 | 0 | | 0 | |
| | 125 | 0 | | 0 | |
| (I-2) +Quinmerac | 1000+250 | 10 | 0 | 100 | 70 |
| | 500+250 | 0 | 0 | 80 | 70 |
| | 1000+125 | 0 | 0 | 100 | 70 |
| | 500+125 | 0 | 0 | 80 | 70 |

gef. = gefundene Schädigung/Wirkung
ber. = nach der Colby-Formel berechnete Schädigung/Wirkung

Tab.7.4 Vorauflauf-Test/Gewächshaus

| Wirkstoff bzw.-kombination | Aufwandmenge g/ha | Testpflanzen Schädigung bzw. Wirkung in % Rüben gef. | ber. | SINAL gef. | ber. |
|---|---|---|---|---|---|
| (I-2) | 500 | 0 | | 90 | |
| | 250 | 0 | | 60 | |
| Quinmerac | 250 | 0 | | 0 | |
| | 125 | 0 | | 0 | |
| (I-2) +Quinmerac | 500+250 | 0 | 0 | 98 | 90 |
| | 250+250 | 0 | 0 | 90 | 60 |
| | 500+125 | 0 | 0 | 100 | 90 |
| | 250+125 | 0 | 0 | 98 | 60 |

gef. = gefundene Schädigung/Wirkung
ber. = nach der Colby-Formel berechnete Schädigung/Wirkung

Tab.8.1 Nachauflauf-Test/Gewächshaus

| Wirkstoff bzw.-kombination | Aufwandmenge g/ha | Testpflanzen Schädigung bzw. Wirkung in % Rüben gef. | Rüben ber. | AVEFA gef. | AVEFA ber. |
|---|---|---|---|---|---|
| (I-1) | 1000 | 0 | | 90 | |
| | 500 | 0 | | 90 | |
| Quinmerac | 500 | 0 | | 40 | |
| | 250 | 0 | | 40 | |
| (I-1) +Quinmerac | 1000+500 | 0 | 0 | 100 | 94 |
| | 500+500 | 0 | 0 | 98 | 94 |
| | 1000+250 | 0 | 0 | 98 | 94 |
| | 500+250 | 0 | 0 | 98 | 94 |

gef. = gefundene Schädigung/Wirkung
ber. = nach der Colby-Formel berechnete Schädigung/Wirkung

Tab.8.2 Nachauflauf-Test/Gewächshaus

| Wirkstoff bzw.-kombination | Aufwandmenge g/ha | Testpflanzen Schädigung bzw. Wirkung in % Rüben gef. | Rüben ber. | POLCO gef. | POLCO ber. |
|---|---|---|---|---|---|
| (I-1) | 500 | 0 | | 60 | |
| | 250 | 0 | | 50 | |
| Quinmerac | 125 | 0 | | 0 | |
| (I-1) +Quinmerac | 500+125 | 0 | 0 | 100 | 60 |
| | 250+125 | 0 | 0 | 90 | 50 |

gef. = gefundene Schädigung/Wirkung
ber. = nach der Colby-Formel berechnete Schädigung/Wirkung

Tab.8.3 Nachauflauf-Test/Gewächshaus

| Wirkstoff bzw.-kombination | Aufwandmenge g/ha | Testpflanzen Schädigung bzw. Wirkung in % Rüben gef. | Rüben ber. | MERAN gef. | MERAN ber. |
|---|---|---|---|---|---|
| (I-2) | 500 | 0 | | 90 | |
| Quinmerac | 500 | 0 | | 30 | |
| | 250 | 0 | | 10 | |
| | 125 | 0 | | 0 | |
| (I-2) +Quinmerac | 500+500 | 0 | 0 | 100 | 93 |
| | 500+250 | 0 | 0 | 100 | 91 |
| | 500+125 | 0 | 0 | 100 | 90 |

gef. = gefundene Schädigung/Wirkung
ber. = nach der Colby-Formel berechnete Schädigung/Wirkung

Tab.8.4 Nachauflauf-Test/Gewächshaus

| Wirkstoff bzw.-kombination | Aufwandmenge g/ha | Testpflanzen Schädigung bzw. Wirkung in % Rüben gef. | Rüben ber. | POLCO gef. | POLCO ber. |
|---|---|---|---|---|---|
| (I-2) | 1000 | 0 | | 98 | |
| | 500 | 0 | | 80 | |
| Quinmerac | 500 | 0 | | 0 | |
| | 250 | 0 | | 0 | |
| | 125 | 0 | | 0 | |
| (I-2) +Quinmerac | 1000+500 | 0 | 0 | 100 | 98 |
| | 500+500 | 0 | 0 | 100 | 80 |
| | 1000+250 | 0 | 0 | 100 | 98 |
| | 500+250 | 0 | 0 | 90 | 80 |
| | 1000+125 | 0 | 0 | 100 | 98 |
| | 500+125 | 0 | 0 | 50 | 80 |

gef. = gefundene Schädigung/Wirkung
ber. = nach der Colby-Formel berechnete Schädigung/Wirkung

Tab.8.5 Nachauflauf-Test/Gewächshaus

| Wirkstoff bzw.-kombination | Aufwandmenge g/ha | Testpflanzen Schädigung bzw. Wirkung in % Rüben gef. | Rüben ber. | CHEAL gef. | CHEAL ber. |
|---|---|---|---|---|---|
| (I-2) | 1000 | 0 | | 98 | |
| | 500 | 0 | | 90 | |
| Quinmerac | 500 | 0 | | 20 | |
| | 250 | 0 | | 20 | |
| | 125 | 0 | | 0 | |
| (I-2) +Quinmerac | 1000+500 | 0 | 0 | 100 | 98 |
| | 500+500 | 0 | 0 | 100 | 92 |
| | 1000+250 | 0 | 0 | 100 | 98 |
| | 500+250 | 0 | 0 | 90 | 92 |
| | 1000+125 | 0 | 0 | 100 | 98 |
| | 500+125 | 0 | 0 | 98 | 90 |

gef. = gefundene Schädigung/Wirkung
ber. = nach der Colby-Formel berechnete Schädigung/Wirkung

**Patentansprüche**

1. Selektiv herbizides Mittel, gekennzeichnet durch einen Gehalt an einer Wirkstoffkombination bestehend aus

    (1) Ethofumesate der Formel

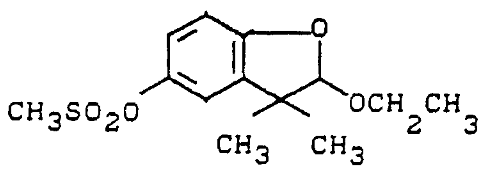

oder
Phenmedipham der Formel

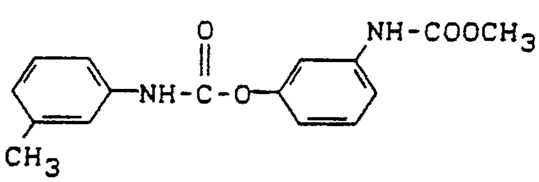

oder
Chloridazon der Formel

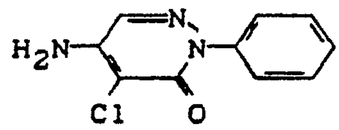

oder
Quinmerac der Formel

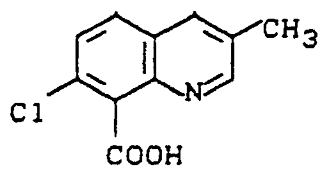

und
(2) mindestens einem 4-Amino-1-carbamoyl-3-methyl-1,2,4-triazolin-5-on der allgemeinen Formel (I)

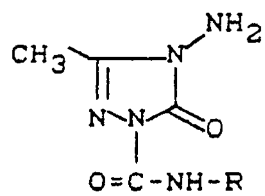

(I)

in welcher

R für jeweils geradkettiges oder verzweigtes $C_1$-$C_{10}$-Alkyl oder Halogen-$C_1$-$C_{10}$-alkyl,für geradkettiges oder verzweigtes $C_3$-$C_8$-Alkenyl oder $C_3$-$C_8$-Alkinyl oder für Cycloalkyl steht, welches gegebenenfalls durch Methyl oder Trifluormethyl substituiert sein kann.

2. Selektiv-herbizide Mittel gemäß Anspruch 1, dadurch gekennzeichnet, daß in den Wirkstoffkombinationen das Gewichtsverhältnis von Wirkstoff der Gruppe (1) zu dem Wirkstoff aus der Gruppe (2) zwischen 1 : 0,01 und 1 : 20 liegt.

3. Verfahren zur selektiven Bekämpfung von Unkraut in Rübenkulturen, dadurch gekennzeichnet, daß man eine Wirkstoffkombination gemäß Anspruch 1 vor oder nach dem Auflaufen der Pflanzen auf die Rübenfelder einwirken läßt.

4. Verwendung von Wirkstoffkombinationen gemäß Anspruch 1 zur selektiven Bekämpfung von Unkraut in Rübenkulturen.

5. Verfahren zur Herstellung von selektiv-herbiziden Mitteln, dadurch gekennzeichnet, daß man eine Wirkstoffkombination gemäß Anspruch 1 mit Streckmitteln und/oder oberflächenaktiven Mitteln vermischt.

6. Selektiv-herbizide Mittel gemäß Anspruch 1, dadurch gekennzeichnet, daß R in Formel (I) für jeweils geradkettiges oder verzweigtes $C_3$-$C_8$-Alkyl oder Halogen-$C_3$-$C_8$-alkyl steht, wobei Halogen insbesondere für Fluor und/oder Chlor steht, oder für jeweils geradkettiges oder verzweigtes $C_3$-$C_5$-Alkenyl oder $C_3$-$C_5$-Alkinyl oder für gegebenenfalls durch Methyl oder Trifluormethyl substituiertes $C_3$-$C_6$-Cycloalkyl steht.

7. Selektiv-herbizides Mittel gemäß Anspruch 1, dadurch gekennzeichnet, daß R in Formel (I) für $-C(CH_3)_3$ oder $-C(CH_3)_2-CH_2F$ steht.